# EUROPEAN PATENT APPLICATION

(11) **EP 4 772 685 A1**
(43) Date of publication of application: **08.07.2026**
(21) Application number: 24870381.1
(22) Date of filing: 05.09.2024
(51) Int. Cl.: D06F 33/60, D06F 33/48

(54) **WATER REMOVAL CONTROL METHOD FOR CLOTHING TREATMENT DEVICE, AND CLOTHING TREATMENT DEVICE**

(30) Priority: 26.09.2023 CN 202311251581
(71) Applicant: Qingdao Haier Washing Machine Co., Ltd., Qingdao, Shandong 266101 (CN); HAIER SMART HOME CO., LTD., Qingdao, Shandong 266101 (CN)
(72) Inventor: YIN, Xiangbo, Qingdao, Shandong 266101 (CN)
(74) Representative: Patentwerk B.V.
(86) International application number: PCT/CN2024/116992
(87) International publication number: WO 2025/066835

(57) **Abstract**

The present invention relates to the technical field of clothing treatment. Specifically provided are a water removal control method for a clothing treatment device, and a clothing treatment device, which aim to solve the problem that when a clothing load in existing clothing treatment devices is evenly distributed at an initial stage of water removal, a small part of the clothing load is concentrated in a recessed surface of glass and cannot be retracted into a drum within a short time period, resulting in loud noise from the clothing load hitting a window pad and the clothing load easily becoming damaged when high speed is initiated. To achieve said purpose, the water removal control method for a clothing treatment device of the present invention comprises: when water removal mode is started up, controlling the clothing treatment device to perform a rotation speed increase operation, and when the rotation speed increases to a first preset rotation speed, controlling the clothing treatment device to operate at the first preset rotation speed for a first preset duration, then continuing to perform the rotation speed increase operation. According to the present invention, by executing the first preset duration at the first preset rotation speed in step S1 and spraying water to an inner side of a window pad in step S2, a clothing load can be better retracted into a drum and noise caused by hitting the window pad is avoided.

## Description

### CROSS-REFERENCE TO RELATED APPLICATION

The present application claims priority from Chinese patent application No. CN202311251581.1, entitled "WATER REMOVAL CONTROL METHOD FOR CLOTHING TREATMENT DEVICE, AND CLOTHING TREATMENT DEVICE" and filed on September 26, 2023, the entire disclosure of which is incorporated herein by reference.

### FIELD

The present disclosure relates to the technical field of clothing treatment, and specifically provides a spinning control method for a clothing treatment apparatus, and a clothing treatment apparatus.

### BACKGROUND

A clothing treatment apparatus, such as a washing-drying integrated machine, has washing and drying functions, and an observation window is provided on the washing-drying integrated machine. In order to meet the drying requirement, the observation window glass is designed to have a concave surface, and the position of the concave surface is designed outside a window gasket. When the load inside the washing-drying integrated machine exceeds 15kg (also known as heavy load), the clothing load inside the washing-drying integrated machine will be dispersed throughout the washing machine after completion of washing, including being dispersed in the concave surface of the observation window glass. During an initial stage of spinning, when the clothing load is evenly distributed, a small portion of the clothing load will be concentrated in the concave surface of the glass and cannot be retrieved into the cylinder in a short period of time, resulting in loud noise caused by the clothing load hitting the window gasket and damage to the clothing load caused by friction between the clothing load and the window gasket during high-speed spinning.

Accordingly, there is a need in the present disclosure to provide a new spinning control method for a clothing treatment apparatus and a clothing treatment apparatus to solve the above technical problem.

### SUMMARY

The present disclosure aims to solve the above technical problem, that is: when the clothing load inside existing clothing treatment apparatuses exceeds 15kg (also known as heavy load), the clothing load inside the clothing treatment apparatuses will be dispersed throughout the washing machine after completion of washing, including being dispersed in the concave surface of the observation window glass. During an initial stage of spinning, when the clothing load is evenly distributed, a small portion of the clothing load will be concentrated in the concave surface of the glass and cannot be retrieved into the cylinder in a short period of time, resulting in loud noise caused by the clothing load hitting the window gasket and damage to the clothing load caused by friction between the clothing load and the window gasket during high-speed spinning.

For this purpose, in a first aspect, the present disclosure provides a spinning control method for a clothing treatment apparatus, where the clothing treatment apparatus includes an inner cylinder and a window gasket, and the spinning control method includes:
S1: when a spinning mode is activated, controlling the clothing treatment apparatus to perform a speed increase operation, and when the speed is increased to a first preset speed, controlling the clothing treatment apparatus to operate at the first preset speed for a first preset duration before continuing to perform the speed increase operation;
S2: when the speed is increased to a second preset speed, controlling the clothing treatment apparatus to spray water toward an inner side of the window gasket until the speed is increased to a third preset speed, and stopping spraying water; and
S3: continuing to perform the speed increase operation, and when the speed is increased to a preset spinning speed, controlling the clothing treatment apparatus to perform a spinning operation at the preset spinning speed;
where the clothing load inside the inner cylinder is in a wall adhering state when the clothing treatment apparatus operates at the first preset speed.

In a case where the above technical solution is adopted, in the present disclosure, the clothing load in the inner cylinder gradually adheres to the wall of inner cylinder under the action of centrifugal force when the speed is increased to the first preset speed, and the clothing treatment apparatus operates at the first preset speed for the first preset duration, extending the time of uniform distribution. This is advantageous for the entry of the clothing load at the concave surface of the observation window glass into the inner cylinder under the action of centrifugal force, achieving the purpose of retrieving it into the inner cylinder. Moreover, in step S2, water is sprayed toward the inner side of the window gasket to wet the clothing load located on the inner side of the window gasket, providing lubrication and facilitating better retrieval of the clothing load into the inner cylinder, thereby avoiding the problems of loud noise caused by the clothing load hitting the window gasket and damage to the clothing load caused by friction between the clothing load and the window gasket.

In a specific implementation of the spinning control method for the clothing treatment apparatus described above, the spinning control method further includes:
obtaining an eccentricity value of the clothing treatment apparatus during the execution of step S3; and
selectively controlling the clothing treatment apparatus to continue to perform the spinning operation or repeat the execution of steps S1-S2 based on the magnitude of the eccentricity value.

In a specific implementation of the spinning control method for the clothing treatment apparatus described above, the step of "selectively controlling the clothing treatment apparatus to continue to perform the spinning operation or repeat the execution of steps S1-S2 based on the magnitude of the eccentricity value" specifically includes:
controlling the clothing treatment apparatus to continue to perform the spinning operation if the eccentricity value is smaller than a preset eccentricity value; and/or
controlling the clothing treatment apparatus to repeat the execution of steps S1-S2 if the eccentricity value is larger than or equal to the preset eccentricity value.

In a case where the above technical solution is adopted, the magnitude of the eccentricity value of the clothing treatment apparatus will have an influence on the hitting on the cylinder and whether the spinning can be normally performed. When the eccentricity value is smaller than the preset eccentricity value, it indicates that the spinning can be normally performed, and the cylinder will not be hit. At this time, the spinning operation can be continued. However, if the eccentricity value is larger than the preset eccentricity value, the hitting on the cylinder is easy to occur, and the spinning cannot be normally performed. Therefore, in this case, the execution of steps S1 and S2 is repeated, so that the clothing load can be better retrieved into the inner cylinder and the distribution uniformity of the clothing load becomes better, which is advantageous for ensuring that the spinning operation can be normally performed on the clothing load.

In a specific implementation of the spinning control method for the clothing treatment apparatus described above, the spinning control method further includes:
obtaining an eccentricity value of the clothing treatment apparatus during the execution of step S3; and
selectively controlling the clothing treatment apparatus to continue to perform the spinning operation or repeat the execution of step S2 based on the magnitude of the eccentricity value.

In a specific implementation of the spinning control method for the clothing treatment apparatus described above, the step of "selectively controlling the clothing treatment apparatus to continue to perform the spinning operation or repeat the execution of step S2 based on the magnitude of the eccentricity value" specifically includes:
controlling the clothing treatment apparatus to continue to perform the spinning operation if the eccentricity value is smaller than a preset eccentricity value; and/or
controlling the clothing treatment apparatus to repeat the execution of step S2 if the eccentricity value is larger than or equal to the preset eccentricity value.

In a case where the above technical solution is adopted, the magnitude of the eccentricity value of the clothing treatment apparatus will have an influence on the hitting on the cylinder and whether the spinning can be normally performed. When the eccentricity value is smaller than the preset eccentricity value, it indicates that the spinning can be normally performed, and the cylinder will not be hit. At this time, the spinning operation can be continued. However, if the eccentricity value is larger than the preset eccentricity value, the hitting on the cylinder is easy to occur, and the spinning cannot be normally performed. Therefore, in this case, the execution of step S2 is repeated, so that the clothing load can be better retrieved into the inner cylinder and the distribution uniformity of the clothing load becomes better, which is advantageous for ensuring that the spinning operation can be normally performed on the clothing load. At the same time, only executing step S2 is advantageous for reducing the overall working time.

In a specific implementation of the spinning control method for the clothing treatment apparatus described above, the spinning control method further includes:
controlling the clothing treatment apparatus to repeat the execution of steps S1-S2 if the eccentricity value is larger than or equal to the preset eccentricity value and the clothing treatment apparatus has repeated the execution of step S2 for a first preset number of times.

In a case where the above technical solution is adopted, if the eccentricity value is still larger than the preset eccentricity value when the clothing treatment apparatus has repeated the execution of step S2 for the first preset number of times, it indicates that simply repeating the execution of step S2 cannot reduce the eccentricity value. At this time, it is necessary to repeat the execution of steps S1-S2, which is advantageous for ensuring that the spinning operation can be normally performed.

In a specific implementation of the spinning control method for the clothing treatment apparatus described above, the spinning control method further includes:
controlling a drainage program of the clothing treatment apparatus to be activated during the execution of steps S1-S3.

In a specific implementation of the spinning control method for the clothing treatment apparatus described above, the first preset duration is 2min~3min; and/or
the range of value for the first preset speed is 80rpm~90rpm; and/or
the range of value for the second preset speed is 95rpm~110rpm; and/or
the range of value for the third preset speed is 190rpm~210rpm.

In a specific implementation of the spinning control method for the clothing treatment apparatus described above, multiple nozzles are provided on an inner side wall of the window gasket; and/or
the clothing treatment apparatus is a washing-drying integrated machine.

In a second aspect, the present disclosure also provides a clothing treatment apparatus, which includes a controller configured to be capable of executing the spinning control method for a clothing treatment apparatus as described in any one of the above technical solutions.

### BRIEF DESCRIPTION OF DRAWINGS

Preferred embodiments of the present disclosure will be described below in connection with the accompanying drawings, in which:
FIG. 1 is a flowchart showing main steps of the spinning control method for the clothing treatment apparatus provided by the present disclosure; and
FIG. 2 is a detailed flowchart of step S5 in the spinning control method for the clothing treatment apparatus provided by the present disclosure.

### DETAILED DESCRIPTION

Preferred embodiments of the present disclosure will be described below with reference to the accompanying drawings. It should be understood by those skilled in the art that the following embodiments are only used to explain the technical principle of the present disclosure, and are not intended to limit the scope of protection of the present disclosure. These embodiments can be adjusted by those skilled in the art as needed to adapt to specific application scenes.

It should be noted that in the description of the present disclosure, terms indicating directional or positional relationships, such as "upper", "lower", "inner", "outer" and the like, are based on the directional or positional relationships shown in the accompanying drawings. They are only used for ease of description, and do not indicate or imply that the relevant device or element must have a specific orientation, or must be constructed or operated in a specific orientation; therefore, they should not be considered as limitations to the present disclosure. In addition, ordinal numbers "first", "second" and the like are only used for descriptive purpose, and should not be understood as indicating or implying relative importance.

In addition, it should also be noted that in the description of the present disclosure, unless otherwise clearly specified or defined, terms "install" and "connect" should be understood in a broad sense; for example, the connection may be a fixed connection, or a detachable connection, or an integral connection; it may be a mechanical connection, or an electrical connection; it may be a direct connection, or an indirect connection implemented through an intermediate medium. For those skilled in the art, the specific meaning of the above terms in the present disclosure can be interpreted according to specific situations.

When the clothing load inside the existing clothing treatment apparatuses exceeds 15kg (also known as heavy load), the clothing load inside the clothing treatment apparatuses will be dispersed throughout the washing machine after completion of washing, including being dispersed in the concave surface of the observation window glass. During an initial stage of spinning, when the clothing load is evenly distributed, a small portion of the clothing load will be concentrated in the concave surface of the glass and cannot be retrieved into the cylinder in a short period of time, resulting in the problems of loud noise caused by the clothing load hitting the window gasket and damage to the clothing load caused by friction between the clothing load and the window gasket during high-speed spinning.

In order to solve the above technical problem, the present disclosure provides a clothing treatment apparatus, which includes a body, an observation window, an inner cylinder, an outer cylinder, and a window gasket; a door is provided on the body, and the observation window is arranged on the door; the glass of the observation window is designed to have a concave surface, and the concave surface is located on an outer side of the window gasket; the inner cylinder is used to place a clothing load, and the inner cylinder is arranged inside the outer cylinder and can rotate; the window gasket is arranged between the door and the outer cylinder for sealing; multiple nozzles are provided on an inner side wall of the window gasket for spraying water toward an inner side of the window gasket. In this way, the clothing load on the inner side of the window gasket can be wet, so that the clothing load can be lubricated when it is retrieved into the inner cylinder.

For example, the clothing treatment apparatus is a washing-drying integrated machine.

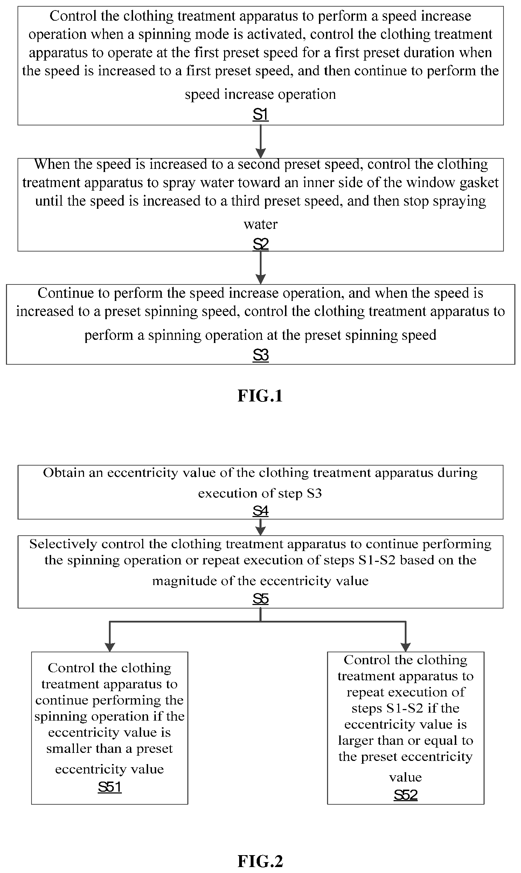

In addition, first referring to FIG. 1, the present disclosure also provides a spinning control method for a clothing treatment apparatus, which includes:
S1: when a spinning mode is activated, controlling the clothing treatment apparatus to perform a speed increase operation, and when the speed is increased to a first preset speed, controlling the clothing treatment apparatus to operate at the first preset speed for a first preset duration before continuing to perform the speed increase operation;
S2: when the speed is increased to a second preset speed, controlling the clothing treatment apparatus to spray water toward an inner side of the window gasket until the speed is increased to a third preset speed, and stopping spraying water; and
S3: continuing to perform the speed increase operation, and when the speed is increased to a preset spinning speed, controlling the clothing treatment apparatus to perform a spinning operation at the preset spinning speed;
where the clothing load inside the inner cylinder is in a wall adhering state when the clothing treatment apparatus operates at the first preset speed; the first preset speed is lower than the second preset speed, the second preset speed is lower than the third preset speed, and the third preset speed is lower than the preset spinning speed.

In the above embodiment, in the spinning mode, a uniform distribution operation is performed before entering the spinning operation, and the spinning of the clothing load is completed after the spinning operation is completed. The preset spinning speed involved in the spinning operation is set according to the actual usage situation, and the spinning operation is stored in the clothing treatment apparatus in advance. When in use, it is only required to call the program corresponding to the spinning operation. In step S1, after the speed of the clothing treatment apparatus is increased to the first preset speed, the clothing treatment apparatus operates for the first preset duration. During this process, the clothing load gradually adheres to the cylinder wall under the action of centrifugal force, and the clothing load at the concave surface of the observation window glass enters the cylinder under the action of centrifugal force, which is helpful for avoiding the problem of loud noise caused by the clothing load hitting the window gasket, etc. In step S2, water is sprayed toward the inner side of the window gasket through the nozzles on the window gasket to wet the clothing load on the inner side of the window gasket, providing lubrication and making it easier for the clothing load to be retrieved into the cylinder.

In an embodiment, the range of value for the first preset speed is 80rpm~90rpm. For example, the value of the first preset speed is 85rpm.

In an embodiment, the range of value for the second preset speed is 95rpm~110rpm. For example, the value of the second preset speed is 100rpm.

In an embodiment, the range of value for the third preset speed is 190rpm~210rpm. For example, the value of the third preset speed is 200rpm.

In an embodiment, the first preset duration is 2min~3min. For example, the first preset duration is 2min.

It should be noted that although the ranges of values for the first preset speed, the second preset speed, the third preset speed, and the first preset duration are given in the above description, they are only exemplary and can be flexibly adjusted according to actual usage situation without deviating from the basic principles of the present disclosure.

In an embodiment, referring to FIG. 2, the spinning control method further includes:
S4: obtaining an eccentricity value of the clothing treatment apparatus during the execution of step S3; and
S5: selectively controlling the clothing treatment apparatus to continue to perform the spinning operation or repeat the execution of steps S1-S2 based on the magnitude of the eccentricity value.

In an embodiment, with continued reference to FIG. 2, the step of "selectively controlling the clothing treatment apparatus to continue to perform the spinning operation or repeat the execution of steps S1-S2 based on the magnitude of the eccentricity value" specifically includes:
S51: controlling the clothing treatment apparatus to continue to perform the spinning operation if the eccentricity value is smaller than a preset eccentricity value; and
S52: controlling the clothing treatment apparatus to repeat the execution of steps S1-S2 if the eccentricity value is larger than or equal to the preset eccentricity value.

In the present disclosure, the magnitude of the eccentricity value of the clothing treatment apparatus will have an influence on the hitting on the cylinder and whether the spinning can be normally performed. When the eccentricity value is smaller than the preset eccentricity value, it indicates that the spinning can be normally performed, and the cylinder will not be hit. At this time, the spinning operation can be continued. However, if the eccentricity value is larger than the preset eccentricity value, the hitting on the cylinder is easy to occur, and the spinning cannot be normally performed. Therefore, in this case, the execution of steps S1 and S2 is repeated, so that the clothing load can be better retrieved into the inner cylinder and the distribution uniformity of the clothing load becomes better, which is advantageous for ensuring that the spinning operation can be normally performed on the clothing load.

It should be noted that in the above description, when the eccentricity value is larger than the preset eccentricity value, the clothing treatment apparatus is controlled to repeat the execution of steps S1-S2 to reduce the eccentricity value, ensuring that the spinning operation can be normally performed, and avoiding the hitting on the cylinder. However, this is not limiting. When the eccentricity value is larger than the preset eccentricity value, it is also possible to control the clothing treatment apparatus to directly execute step S2, or directly execute step S1, or alternatively execute step S1 and step S2, all of which are within the scope of protection of the present disclosure. Therefore, without deviating from the basic principles of the present disclosure, the selection of repetition mode can be flexibly set according to actual usage situations.

Specifically, in a second embodiment, the spinning control method further includes:
obtaining an eccentricity value of the clothing treatment apparatus during the execution of step S3; and
selectively controlling the clothing treatment apparatus to continue to perform the spinning operation or repeat the execution of step S2 based on the magnitude of the eccentricity value.

In an embodiment, the step of "selectively controlling the clothing treatment apparatus to continue to perform the spinning operation or repeat the execution of step S2 based on the magnitude of the eccentricity value" specifically includes:
controlling the clothing treatment apparatus to continue to perform the spinning operation if the eccentricity value is smaller than a preset eccentricity value; and
controlling the clothing treatment apparatus to repeat the execution of step S2 if the eccentricity value is larger than or equal to the preset eccentricity value.

In the above embodiment, the magnitude of the eccentricity value of the clothing treatment apparatus will have an influence on the hitting on the cylinder and whether the spinning can be normally performed. When the eccentricity value is smaller than the preset eccentricity value, it indicates that the spinning can be normally performed, and the cylinder will not be hit. At this time, the spinning operation can be continued. However, if the eccentricity value is larger than the preset eccentricity value, the hitting on the cylinder is easy to occur, and the spinning cannot be normally performed. Therefore, in this case, the execution of step S2 is repeated, so that the clothing load can be better retrieved into the inner cylinder and the distribution uniformity of the clothing load becomes better, which is advantageous for ensuring that the spinning operation can be normally performed on the clothing load. At the same time, since only step S2 is executed, it takes less time and is advantageous for reducing the overall working time.

In the above embodiments, the spinning control method further includes:
controlling the clothing treatment apparatus to repeat the execution of steps S1-S2 if the eccentricity value is larger than or equal to the preset eccentricity value and the clothing treatment apparatus has repeated the execution of step S2 for a first preset number of times.

In the above embodiment, if the eccentricity value is still larger than the preset eccentricity value when the clothing treatment apparatus has repeated the execution of step S2 for the first preset number of times, it indicates that simply repeating the execution of step S2 cannot reduce the eccentricity value. At this time, it is necessary to repeat the execution of steps S1-S2, which is advantageous for ensuring that the spinning operation can be normally performed.

In a third embodiment, the spinning control method further includes:
obtaining an eccentricity value of the clothing treatment apparatus during the execution of step S3; and
selectively controlling the clothing treatment apparatus to continue to perform the spinning operation or repeat the execution of step S1 based on the magnitude of the eccentricity value.

The step of "selectively controlling the clothing treatment apparatus to continue to perform the spinning operation or repeat the execution of step S1 based on the magnitude of the eccentricity value" specifically includes:
controlling the clothing treatment apparatus to continue to perform the spinning operation if the eccentricity value is smaller than a preset eccentricity value;
controlling the clothing treatment apparatus to repeat the execution of step S1 if the eccentricity value is larger than or equal to the preset eccentricity value; and
controlling the clothing treatment apparatus to repeat the execution of steps S1-S2 if the eccentricity value is larger than or equal to the preset eccentricity value and the clothing treatment apparatus has repeated the execution of step S1 for a second preset number of times.

In the above embodiment, if the eccentricity value is still larger than the preset eccentricity value when the clothing treatment apparatus has repeated the execution of step S1 for the second preset number of times, it indicates that simply repeating the execution of step S1 cannot reduce the eccentricity value. At this time, it is necessary to repeat the execution of steps S1-S2, which is advantageous for ensuring that the spinning operation can be normally performed.

Of course, in the above embodiment, if the eccentricity value is still larger than the preset eccentricity value when the clothing treatment apparatus has repeated the execution of steps S1-S2 for a third preset number of times, a reminder will be issued that the spinning operation cannot be normally performed.

In a fourth embodiment, the spinning control method further includes:
obtaining an eccentricity value of the clothing treatment apparatus during the execution of step S3; and
selectively controlling the clothing treatment apparatus to continue to perform the spinning operation or alternately execute step S1 and step S2 repeatedly based on the magnitude of the eccentricity value.

The step of "selectively controlling the clothing treatment apparatus to continue to perform the spinning operation or alternately execute step S1 and step S2 repeatedly based on the magnitude of the eccentricity value" specifically includes:
controlling the clothing treatment apparatus to continue to perform the spinning operation if the eccentricity value is smaller than a preset eccentricity value; and
controlling the clothing treatment apparatus to alternately execute step S1 and step S2 repeatedly if the eccentricity value is larger than or equal to the preset eccentricity value.

In this embodiment, if the eccentricity value is still larger than the preset eccentricity value when the number of times step S1 is repeatedly executed and the number of times step S2 is repeatedly executed reach a fourth preset number of times, a reminder will be issued that the spinning operation cannot be normally performed.

It should be noted that the specific values of the first preset number of times, the second preset number of times, the third preset number of times, and the fourth preset number of times are not specifically limited in the present disclosure, and can be flexibly set according to actual usage situation without deviating from the basic principles of the present disclosure.

In an embodiment, the spinning control method further includes:
controlling a drainage program of the clothing treatment apparatus to be activated during the execution of steps S1-S3.

During the execution of step S1, due to the large amount of water contained in the clothing load, the clothing load will discharge a large amount of water when rotating at the first preset speed. Therefore, it is necessary to activate the drainage program until it is detected that no drainage is needed; then the drainage program is stopped. In steps S2 and S3, it is also necessary to activate the drainage program for drainage until it is detected that no drainage is needed; then the drainage program is stopped.

In a second aspect, the present disclosure also provides a clothing treatment apparatus, which includes a controller configured to be capable of executing the spinning control method for a clothing treatment apparatus as described in any one of the above technical solutions.

In the various embodiments described above and various further developed embodiments, in the present disclosure, the clothing load in the inner cylinder gradually adheres to the wall of inner cylinder under the action of centrifugal force when the speed is increased to the first preset speed, and the clothing treatment apparatus operates at the first preset speed for the first preset duration, extending the time of uniform distribution. This is advantageous for the entry of the clothing load at the concave surface of the observation window glass into the inner cylinder under the action of centrifugal force, achieving the purpose of retrieving it into the inner cylinder. Moreover, in step S2, water is sprayed toward the inner side of the window gasket to wet the clothing load located on the inner side of the window gasket, providing lubrication and facilitating better retrieval of the clothing load into the inner cylinder, thereby avoiding the problems of loud noise caused by the clothing load hitting the window gasket and damage to the clothing load caused by friction between the clothing load and the window gasket. At the same time, it also solves the problem that the clothing treatment apparatus may easily hit the cylinder or the spinning operation cannot be performed when the maximum eccentricity value set by the program is exceeded during heavy load spinning.

Hitherto, the technical solutions of the present disclosure have been described in connection with the preferred embodiments shown in the accompanying drawings, but it is easily understood by those skilled in the art that the scope of protection of the present disclosure is obviously not limited to these specific embodiments. Without departing from the principles of the present disclosure, those skilled in the art can make equivalent changes or replacements to relevant technical features, and all the technical solutions after these changes or replacements will fall within the scope of protection of the present disclosure.

## Claims

1. A spinning control method for a clothing treatment apparatus, **characterized in that** the clothing treatment apparatus comprises an inner cylinder and a window gasket, and the spinning control method comprises:
S1: when a spinning mode is activated, controlling the clothing treatment apparatus to perform a speed increase operation, and when the speed is increased to a first preset speed, controlling the clothing treatment apparatus to operate at the first preset speed for a first preset duration before continuing to perform the speed increase operation;
S2: when the speed is increased to a second preset speed, controlling the clothing treatment apparatus to spray water toward an inner side of the window gasket until the speed is increased to a third preset speed, and stopping spraying water; and
S3: continuing to perform the speed increase operation, and when the speed is increased to a preset spinning speed, controlling the clothing treatment apparatus to perform a spinning operation at the preset spinning speed;
wherein the clothing load inside the inner cylinder is in a wall adhering state when the clothing treatment apparatus operates at the first preset speed.

2. The spinning control method for a clothing treatment apparatus according to claim 1, further comprising:
obtaining an eccentricity value of the clothing treatment apparatus during the execution of step S3; and
selectively controlling the clothing treatment apparatus to continue to perform the spinning operation or repeat the execution of steps S1-S2 based on the magnitude of the eccentricity value.

3. The spinning control method for a clothing treatment apparatus according to claim 2, wherein the step of "selectively controlling the clothing treatment apparatus to continue to perform the spinning operation or repeat the execution of steps S1-S2 based on the magnitude of the eccentricity value" specifically comprises:
controlling the clothing treatment apparatus to continue to perform the spinning operation if the eccentricity value is smaller than a preset eccentricity value; and/or
controlling the clothing treatment apparatus to repeat the execution of steps S1-S2 if the eccentricity value is larger than or equal to the preset eccentricity value.

4. The spinning control method for a clothing treatment apparatus according to claim 1, further comprising:
obtaining an eccentricity value of the clothing treatment apparatus during the execution of step S3; and
selectively controlling the clothing treatment apparatus to continue to perform the spinning operation or repeat the execution of step S2 based on the magnitude of the eccentricity value.

5. The spinning control method for a clothing treatment apparatus according to claim 4, wherein the step of "selectively controlling the clothing treatment apparatus to continue to perform the spinning operation or repeat the execution of step S2 based on the magnitude of the eccentricity value" specifically comprises:
controlling the clothing treatment apparatus to continue to perform the spinning operation if the eccentricity value is smaller than a preset eccentricity value; and/or
controlling the clothing treatment apparatus to repeat the execution of step S2 if the eccentricity value is larger than or equal to the preset eccentricity value.

6. The spinning control method for a clothing treatment apparatus according to claim 5, further comprising:
controlling the clothing treatment apparatus to repeat the execution of steps S1-S2 if the eccentricity value is larger than or equal to the preset eccentricity value and the clothing treatment apparatus has repeated the execution of step S2 for a first preset number of times.

7. The spinning control method for a clothing treatment apparatus according to claim 1, further comprising:
controlling a drainage program of the clothing treatment apparatus to be activated during the execution of steps S1-S3.

8. The spinning control method for a clothing treatment apparatus according to claim 1, wherein the first preset duration is 2min∼3min; and/or
the range of value for the first preset speed is 80rpm~90rpm; and/or
the range of value for the second preset speed is 95rpm~110rpm; and/or
the range of value for the third preset speed is 190rpm~210rpm.

9. The spinning control method for a clothing treatment apparatus according to any one of claims 1 to 8, wherein multiple nozzles are provided on an inner side wall of the window gasket; and/or
the clothing treatment apparatus is a washing-drying integrated machine.

10. A clothing treatment apparatus, comprising a controller, **characterized in that** the controller is configured to be capable of executing the spinning control method for a clothing treatment apparatus according to any one of claims 1 to 9.
